# EUROPEAN PATENT SPECIFICATION

(11) **EP 4 253 478 B1**
(45) Date of publication and mention of the grant of the patent: **30.04.2025**
(21) Application number: 21913073.9
(22) Date of filing: 30.07.2021
(51) Int. Cl.: C08L 63/00, C08L 83/10, C08K 7/14, C08J 5/24, B32B 17/04, B32B 17/12, B32B 27/04, B32B 27/38, B32B 33/00

(54) **EPOXY RESIN COMPOSITION AND TRANSPARENT COMPOSITE MATERIAL COMPRISING SAME, AND LAMINATED BOARD**
EPOXIDHARZZUSAMMENSETZUNG UND TRANSPARENTES VERBUNDMATERIAL DAMIT SOWIE LAMINIERTE PLATTE
COMPOSITION DE RÉSINE ÉPOXY ET MATÉRIAU COMPOSITE TRANSPARENT LA COMPRENANT, ET PANNEAU STRATIFIÉ

(30) Priority: 28.12.2020 CN 202011577184
(43) Date of publication of application: 04.10.2023
(73) Proprietor: Guangdong Hinno-Tech Co., Ltd., Guangzhou, Guangdong 510000 (CN)
(72) Inventor: QI, Xiaolong, Guangzhou, Guangdong 510000 (CN); YU, Jiabin, Guangzhou, Guangdong 510000 (CN); ZHU, Yangjie, Guangzhou, Guangdong 510000 (CN); CHEN, Jianxiong, Guangzhou, Guangdong 510000 (CN)
(74) Representative: Murgitroyd & Company
(86) International application number: PCT/CN2021/109669
(87) International publication number: WO 2022/142325

(56) References cited:
- EP-A1- 3 453 730
- CN-A- 102 575 085
- CN-A- 104 903 380
- CN-A- 104 903 380
- CN-A- 109 467 941
- CN-A- 111 087 759
- CN-A- 112 759 891
- JP-A- H03 237 749

## Description

### TECHNICAL FIELD

The present disclosure relates to the technical field of composite materials, in particular to an epoxy resin composition and a transparent composite material comprising the same and a laminated board.

### BACKGROUND

With the rapid development of the electronics industry, an increasingly urgent need exists for highly transparent composite materials. For example, a conventional transparent composite material is as follows: a transparent resin composition, having an Abbe number of not less than 45 and including a transparent resin (a) and a glass filler (b). Further, the difference in refractive index between the transparent resin (a) and the glass filler (b) in the transparent resin composition is not more than 0.01. The transparent resin (a) in the transparent resin composition is composed of at least one substance having a higher refractive index than that of the glass filler (b) and at least one substance having a lower refractive index than that of the glass filler (b). The glass filler (b) in the transparent resin composition has a refractive index of 1.45 to 1.55. The transparent resin (a) in the transparent resin composition is a cross-linked acrylate resin having at least bifunctional (methyl) acrylate as the main component. The cross-linked acrylate resin contains (methyl) acrylate having an alicyclic structure as its constituent.

Although the conventional transparent composite material as mentioned above has improved light transmittance, its flexural strength is unsatisfactory. Related technologies are known from CN 104903380A and EP 3453730A1. CN 104903380A discloses a resin composition for a transparent substrate, which comprises an epoxy resin (A) and a curing agent (B), wherein the curing agent (B) comprises a cyclohexane tricarboxylic acid anhydride. EP 3453730A1 discloses a resin composition including: (A) an epoxy resin, (B) an epoxy compound in a particular structure, (C) an epoxy compound in another particular structure, (D) a phenolic curing agent, and (E) a curing accelerator.

### SUMMARY

Accordingly, the main purpose of the present disclosure is to provide an epoxy resin composition and a transparent composite material comprising the same, and a laminated board. The composite material prepared from the epoxy resin composition provided in the present disclosure, a curing agent, and a curing accelerator as raw materials not only has high light transmittance, but also has high flexural strength.

Particular technical solutions include the follows.

An epoxy resin composition is provided, comprising an epoxy resin A and an epoxy resin B.

A refractive index of the epoxy resin A is 1.54 to 1.8 and a light transmittance of the epoxy resin A is greater than 90%.

A refractive index of the epoxy resin B is 1.54 to 1.8 and a light transmittance of the epoxy resin B is greater than 90%.

The epoxy resin A is an organosilicon modified epoxy resin and the epoxy resin B is another type of epoxy resin.

The organosilicon modified epoxy resin is at least one selected from a group consisting of hydroxyl-terminated polydimethylsiloxane modified epoxy resin, amino-terminated polydimethylsiloxane modified epoxy resin, and aminopropyl-terminated polydimethyldiphenylsiloxane modified epoxy resin.

The another type of epoxy resin is selected from a group consisting of bisphenol A epoxy resin, bisphenol F epoxy resin, and glycidyl ester epoxy resin.

In an embodiment, a mass ratio of the epoxy resin A to the epoxy resin B is (1 to 3):1.

In an embodiment, the mass ratio of the epoxy resin A to the epoxy resin B is (1.25 to 2):1.

An epoxy resin composite material is provided, comprising the epoxy resin composition as described above, a curing agent, and a curing accelerator.

In an embodiment, the curing agent is at least one selected from a group consisting of ethylenediamine, modified hexamethylenediamine, hexamethylenediamine adduct, dicyandiamide, diaminodiphenyl methane, and diaminodiphenyl sulfone.

In an embodiment, the curing accelerator is at least one selected from a group consisting of N,N-dimethylbenzylamine, triethylamine, N,N-dimethylaniline, imidazoles accelerator, and peroxides accelerator.

In an embodiment, the epoxy resin composite material further comprises an additional functional additive. The additional functional additive is at least one selected from a group consisting of an antioxidant, an anti-ultraviolet additive, a dispersant, and a diluent.

A method for preparing the epoxy resin composite material as described above, comprising:
providing the epoxy resin composition, the curing agent, the curing accelerator, and a solvent, and mixing them.

In an embodiment, the solvent is dimethylformamide and/or propylene glycol methyl ether.

A prepreg is provided, which is made from a raw material comprising a glass filler and a resin material. The resin material is made from a raw material comprising the epoxy resin composition as described above or the epoxy resin composite material as described above.

A method for preparing the prepreg as described above is provided, comprising:
impregnating the glass filler into the resin material, and heating.

In an embodiment, a temperature for the heating is 150°C to 180°C and a time for the heating is 2 minutes to 5 minutes.

A laminated board is provided, comprising a laminate of a prepreg which is made from a raw material comprising the epoxy resin composition as described above or the epoxy resin composite material as described above, or which is the prepreg as described above.

In an embodiment, the laminate is further coated with a release film on one or both sides thereof.

A method for preparing the laminated board as described above is provided, comprising: providing the prepreg, and laminating the prepreg followed by hot pressing under vacuum.

In an embodiment, conditions for the hot pressing under vacuum comprise a temperature of 150°C to 180°C, a pressure of 10 kgf/cm² to 20 kgf/cm², and a hot pressing time of 60 minutes to 90 minutes.

In an embodiment, the preparing method further comprises: coating a release film on one or both sides of a laminate obtained in the laminating.

Compared to the relevant art, the present disclosure has the following beneficial effects.

In the present disclosure, the organosilicon modified epoxy resin satisfying a specific condition (i.e., 1.54 to 1.8 and a light transmittance greater than 90%) and another type of epoxy resin also satisfying this specific condition are combined to form a specific epoxy resin composition. A composite material prepared from the epoxy resin composition, a curing agent, and a curing accelerator has advantages of high light transmittance and high flexure strength, and also has high bonding strength.

### DETAILED DESCRIPTION OF THE EMBODIMENTS

In order to facilitate the understanding of the present disclosure, the below will make a complete description of the present disclosure. However, the present disclosure can be implemented in many different forms and is not limited to the embodiments described herein. On the contrary, these embodiments are provided to make the understanding of the disclosure content of the present disclosure more thorough and comprehensive.

Unless otherwise defined, all technical and scientific terms used herein have the same meaning as commonly understood by one of ordinary skill in the art of the present disclosure. The terms used in the description of the present disclosure are merely for the purpose of describing specific embodiments, and are not intended to limit the present disclosure. As used herein, the term "and/or" includes any and all combinations of one or more of the associated listed items.

An epoxy resin composition is provided in embodiments of the present disclosure. The epoxy resin composition includes an epoxy resin A and an epoxy resin B.

A refractive index of the epoxy resin A is 1.54 to 1.8, and a light transmittance of the epoxy resin A is greater than 90%.

A refractive index of the epoxy resin B is 1.54 to 1.8, and a light transmittance of the epoxy resin B is greater than 90%.

The epoxy resin A is an organosilicon modified epoxy resin, and the epoxy resin B is another type of epoxy resin.

In an example, the refractive index of the epoxy resin A is 1.65, and the light transmittance of the epoxy resin A is 90%. The refractive index of the epoxy resin B is 1.54, and the light transmittance of the epoxy resin B is 90%.

In an example, the organosilicon modified epoxy resin is at least one selected from a group consisting of hydroxyl-terminated polydimethylsiloxane modified epoxy resin (a refractive index of 1.65 and a light transmittance of 90%), polymethylphenylsiloxane modified epoxy resin (a refractive index of 1.65 and a light transmittance of 90%), amino-terminated polydimethylsiloxane modified epoxy resin (a refractive index of 1.65 and a light transmittance of 90%), and aminopropyl-terminated polydimethyldiphenylsiloxane modified epoxy resin (a refractive index of 1.65 and a light transmittance of 90%).

In an example, the another type of epoxy resin is selected from a group consisting of bisphenol A epoxy resin (a refractive index of 1.54 and a light transmittance of 90%), bisphenol F epoxy resin (a refractive index of 1.54 and a light transmittance of 90%), glycidyl ester epoxy resin (a refractive index of 1.54 and a light transmittance of 90%), and polyphenolic glycidyl ether epoxy resin (a refractive index of 1.54 and a light transmittance of 90%).

In an example, a mass ratio of the epoxy resin A to the epoxy resin B is (1 to 3):1.

In an example, the mass ratio of the epoxy resin A to the epoxy resin B is (1.25 to 2):1.

An epoxy resin composite material is provided in embodiments of the present disclosure. The epoxy resin composite material includes the epoxy resin composition as described above, a curing agent, and a curing accelerator.

It should be understood that, in order to achieve an ideal curing effect, appropriate amounts of the curing agent and the curing accelerator can be selected. In an example, the epoxy resin composite material provided in embodiments of the present disclosure, in parts by mass, includes:
40 to 60 parts of the Epoxy resin A,
20 to 40 parts of the Epoxy resin B,
5 to 10 parts of the curing agent, and
0.5 to 3 parts of the curing accelerator.

It should be understood that, in order to achieve an ideal curing effect, appropriate types of the curing agent and the curing accelerator can be selected.

In an example, the curing agent is at least one selected from a group consisting of ethylenediamine, modified hexamethylenediamine, hexamethylenediamine adduct, dicyandiamide, diaminodiphenyl-methane, and diaminodiphenylsulfone.

In an example, the curing accelerator is at least one selected from a group consisting of N,N-dimethylbenzylamine, triethylamine, N,N-dimethylaniline, imidazoles accelerator and peroxides accelerator.

In an example, the epoxy resin composite material further includes an additional functional additive. The additional functional additive described in the embodiments of the present disclosure includes, but not limited to, an antioxidant, an anti-ultraviolet additive, a dispersant, a diluent, or other additives. In an embodiment of the present disclosure, the antioxidant is, for example, antioxidant 1010 or other antioxidant. The anti-ultraviolet additive is, for example, ultraviolet absorber UV-0. The dispersant is, for example, dispersant 5040. The diluent is, for example, allyl glycidyl ether.

A method for preparing the epoxy resin composite material as described above is provided in embodiments of the present disclosure, which includes steps of:
providing the epoxy resin composition, the curing agent, the curing accelerator, and a solvent, and mixing them.

In an example, the solvent is dimethylformamide and/or propylene glycol methyl ether. Preferably, the solvent is dimethylformamide.

It should be understood that, the amount of the solvent in the embodiments of the present disclosure is not specifically limited. For example, 50 to 100 parts of the solvent is used in the preparation of the epoxy resin composite material having the following formulation: 40 to 60 parts of the epoxy resin A, 20 to 40 parts of the epoxy resin B, 5 to 10 parts of the curing agent, and 0.5 to 3 parts of the curing accelerator.

A prepreg is provided in embodiments of the present disclosure. The prepreg is made from a raw material including a glass filler and a resin material. The resin material is made from a raw material including the epoxy resin composition as described above or the epoxy resin composite material as described above.

The glass filler in the embodiments of the present disclosure includes, but is not limited to, glass fiber fabric such as 1080 glass fiber fabric (a basis weight of 48 g/m²).

A method for preparing the prepreg as described above is provided in embodiments of the present disclosure, which includes steps of:
impregnating the glass filler into the resin material, and heating.

In an example, a temperature for the heating is 150°C to 180°C, and a time for the heating is 2 minutes to 5 minutes.

A laminated board is provided in embodiments of the present disclosure. The laminated board includes a laminate of a prepreg. The prepreg is made from a raw material including the epoxy resin composition as described above or the epoxy resin composite material as described above. Alternatively, the prepreg is the prepreg as described above.

In an example, the laminate is coated with a release film on one or both sides thereof.

A method for preparing the laminated board as described above is provided in embodiments of the present disclosure, which includes steps of: providing the prepreg, and laminating the prepreg followed by hot pressing under vacuum.

In an example, conditions for the hot pressing under vacuum include: a temperature of 150°C to 180°C, a pressure of 10 kgf/cm² to 20 kgf/cm², and a hot pressing time of 60 minutes to 90 minutes.

In an example, the method further includes coating a release film on one or both sides of a laminate obtained in the laminating.

### Example 1

(1) 5 parts of dicyandiamide and 50 parts of dimethylformamide were added into a batching bottle and fully stirred to dissolve. Thereafter, 40 parts of an organosilicon modified epoxy resin, 20 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 2

(1) 5 parts of dicyandiamide and 50 parts of dimethylformamide were added into a batching bottle and fully stirred to dissolve. Thereafter, 50 parts of hydroxyl-terminated polydimethylsiloxane modified epoxy resin, 20 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 3

(1) 5 parts of dicyandiamide and 50 parts of dimethylformamide were added into a batching bottle and fully stirred to dissolve. Thereafter, 60 parts of hydroxyl-terminated polydimethylsiloxane modified epoxy resin, 20 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 4

(1) 5 parts of dicyandiamide and 50 parts of dimethylformamide were added into a batching bottle and fully stirred to dissolve. Thereafter, 40 parts of hydroxyl-terminated polydimethylsiloxane modified epoxy resin, 30 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate is placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 5

(1) 5 parts of dicyandiamide and 50 parts of dimethylformamide were added into a batching bottle and fully stirred to dissolve. Thereafter, 50 parts of hydroxyl-terminated polydimethylsiloxane modified epoxy resin, 30 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate is placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 6

(1) 5 parts of dicyandiamide and 50 parts of dimethylformamide were added into a batching bottle and fully stirred to dissolve. Thereafter, 60 parts of hydroxyl-terminated polydimethylsiloxane modified epoxy resin, 30 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 7

(1) 5 parts of dicyandiamide and 50 parts of dimethylformamide were added into a batching bottle and fully stirred to dissolve. Thereafter, 40 parts of hydroxyl-terminated polydimethylsiloxane modified epoxy resin, 40 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and backed in a hot air circulation oven at 180°C for 3 minutes to obtain a prepreg having a resin content of 68%.
(3) 6 prepregs were laminated, upper and lower sides of the laminate each were coated with a release film, and then the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 8

(1) 5 parts of dicyandiamide and 50 parts of dimethylformamide were added into a batching bottle and fully stirred to dissolve. Thereafter, 50 parts of hydroxyl-terminated polydimethylsiloxane modified epoxy resin, 40 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and the laminate is placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 9

(1) 5 parts of dicyandiamide and 50 parts of dimethylformamide were added into a batching bottle and fully stirred to dissolve. Thereafter, 60 parts of hydroxyl-terminated polydimethylsiloxane modified epoxy resin, 40 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 10

(1) 5 parts of dicyandiamide and 50 parts of dimethylformamide were added into a batching bottle and fully stirred to dissolve. Thereafter, 40 parts of hydroxyl-terminated polydimethylsiloxane modified epoxy resin, 25 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and the laminate was placed in a vacuum press with programmable temperature and pressure control, and cured under vacuum at a pressure of 15 kgf/cm² and a product temperature of 180°C for 60 minutes to obtain a laminated board with a thickness of 0.6 mm.

### Example 11

(1) 5 parts of dicyandiamide and 50 parts of dimethylformamide were added into a batching bottle and fully stirred to dissolve. Thereafter, 50 parts of hydroxyl-terminated polydimethylsiloxane modified epoxy resin, 25 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 12

(1) 5 parts of dicyandiamide and 50 parts of dimethylformamide were added into a batching bottle and fully stirred to dissolve. Thereafter, 60 parts of hydroxyl-terminated polydimethylsiloxane modified epoxy resin, 25 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 13

(1) 5 parts of dicyandiamide and 50 parts of dimethylformamide were added into a batching bottle and fully stirred to dissolve. Thereafter, 80 parts of hydroxyl-terminated polydimethylsiloxane modified epoxy resin, 10 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Example 14

(1) 5 parts of dicyandiamide and 50 parts of dimethylformamide were added into a batching bottle and fully stirred to dissolve. Thereafter, 30 parts of hydroxyl-terminated polydimethylsiloxane modified epoxy resin, 60 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepreg were laminated, upper and lower sides of the laminate each were coated with a release film, and then the laminate is placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Comparative Example 1

(1) 5 parts of dicyandiamide and 50 parts of dimethylformamide were added into a batching bottle and fully stirred to dissolve. Thereafter, 85 parts of hydroxyl-terminated polydimethylsiloxane modified epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Comparative Example 2

(1) 5 parts of dicyandiamide and 50 parts of dimethylformamide were added into a batching bottle and fully stirred to dissolve. Thereafter, 85 parts of bisphenol A epoxy resin, 1 part of antioxidant 1010, and 0.5 parts of 2-methylimidazole were successively added into the batching bottle and fully stirred to prepare a glue solution.
(2) 1080 glass fiber fabric with a basis weight of 48 g/m² was impregnated with the glue solution, and baked in a hot air circulation oven at 180°C for 3 minutes to obtain a prepreg having a resin content of 68%.
(3) 6 prepregs were laminated, upper and lower sides of the laminate each were coated with a release film, and then the laminate was placed in a vacuum pressing machine with programmable temperature and pressure control, and cured under vacuum at a pressure of 15 kgf/cm² and a product temperature of 180°C for 60 minutes to obtain a laminated board with a thickness of 0.6 mm.

### Comparative Example 3

This comparative example is a comparative example of Example 12. The difference from Example 12 is in that diphenylsilanediol modified epoxy resin having a refractive index of 1.5 and a light transmittance of 90% is used to replace hydroxyl-terminated polydimethylsiloxane modified epoxy resin in Example 12.

### Comparative Example 4

This comparative example is a comparative example of Example 12. The difference from Example 12 is in that phenolic epoxy resin having a refractive index of 1.5 and a light transmittance of 90% is used to replace the bisphenol A epoxy resin in Example 12.

### Comparative Example 5

This comparative example is a comparative example of Example 12. The difference from Example 12 is in that polycarbonate, as a non-organosilicon modified epoxy resin, having a refractive index of 1.54 to 1.8 and a light transmittance greater than 90% is used to replace the organosilicon modified epoxy resin in Example 12.

### Performance Test

The laminated boards in Examples and Comparative Examples as described above were respectively taken for performing the following tests.
1. Light transmittance was tested by a spectrophotometer.
2. Bonding strength was tested according to IPC-TM-650 2.4.8. The laminated board was cut into a sample strip having a width of 3.18 mm and a length of 50.8 mm, which was sticked to a hard backboard. A certain layer of the glass fiber fabric of the laminated board was peeled off a distance of 12.7 mm. The peeled layer was then clamped with a clamp to test the bonding force between layers by the method for testing peel strength.
3. Flexural strength was tested according to IPC-TM-650 2.4.4.

**Table 1**

| | Example 1 | Example 2 | Example 3 | Example 4 |
|---|---|---|---|---|
| organosilicon modified epoxy resin: hydroxyl-terminated polydimethylsiloxane modified epoxy resin | 40 | 50 | 60 | 40 |
| bisphenol A epoxy resin | 20 | 20 | 20 | 30 |
| Dicyandiamide | 5 | 5 | 5 | 5 |
| Antioxidant 1010 | 1 | 1 | 1 | 1 |
| 2-methylimidazole | 0.5 | 0.5 | 0.5 | 0.5 |
| Substrate (glass fiber fabric) | 1080 | 1080 | 1080 | 1080 |
| Transmittance (%) | 84 | 76 | 75 | 82 |
| Bonding strength/ (lbf/inch) | 5.3 | 5.3 | 5.2 | 5.4 |
| Flexural strength /(N/mm²) warp direction / weft direction | 608/583 | 618/597 | 621/609 | 611/590 |

**Table 2**

| | Example 5 | Example 6 | Example 7 | Example 8 |
|---|---|---|---|---|
| organosilicon modified epoxy resin: hydroxyl-terminated polydimethylsiloxane modified epoxy resin | 50 | 60 | 40 | 50 |
| bisphenol A epoxy resin | 30 | 30 | 40 | 40 |
| Dicyandiamide | 5 | 5 | 5 | 5 |
| Antioxidant 1010 | 1 | 1 | 1 | 1 |
| 2-Methylimidazole | 0.5 | 0.5 | 0.5 | 0.5 |
| Substrate (glass fiber fabric) | 1080 | 1080 | 1080 | 1080 |
| Transmittance (%) | 84 | 85 | 77 | 80 |
| Bonding strength/ (lbf/inch) | 5.3 | 5.3 | 5.7 | 5.4 |
| Flexural strength/ (N/mm²) warp direction / weft direction | 623/605 | 631/612 | 593/575 | 603/592 |

**Table 3**

| | Example 9 | Example 10 | Example 11 | Example 12 | Example 13 | Example 14 |
|---|---|---|---|---|---|---|
| hydroxyl-terminated polydimethylsiloxane modified epoxy resin | 60 | 40 | 50 | 60 | 80 | 30 |
| Bisphenol A epoxy resin | 40 | 25 | 25 | 25 | 10 | 60 |
| Dicyandiamide | 5 | 5 | 5 | 5 | 5 | 5 |
| Antioxidant 1010 | 1 | 1 | 1 | 1 | 1 | 1 |
| 2-Methylimidazole | 0.5 | 0.5 | 0.5 | 0.5 | 0.5 | 0.5 |
| Substrate (glass fiber fabric) | 1080 | 1080 | 1080 | 1080 | 1080 | 1080 |
| Transmittance (%) | 82 | 83 | 86 | 78 | 61 | 65 |
| Bonding strength/ (lbf/inch) | 5.3 | 5.4 | 5.4 | 5.2 | 5.1 | 6.0 |
| Flexural strength/ (N/mm²) warp direction / weft direction | 610/588 | 618/599 | 628/610 | 635/620 | 648/627 | 586/572 |

**Table 4**

| | Comparative example 1 | Comparative example 2 | Comparative example 3 | Comparative example 4 | Comparative example 5 |
|---|---|---|---|---|---|
| organosilicon modified epoxy resin: hydroxyl-terminated polydimethylsiloxane modified epoxy resin | 85 | 0 | 0 | 60 | 0 |
| polycarbonate | 0 | 0 | 0 | 0 | 60 |
| Diphenylsilanediol modified epoxy resin | 0 | 0 | 60 | 0 | 0 |
| Bisphenol A epoxy resin | 0 | 85 | 25 | 0 | 25 |
| Phenolic epoxy resin | 0 | 0 | 0 | 25 | 0 |
| Dicyandiamide | 5 | 5 | 5 | 5 | 5 |
| Antioxidant 1010 | 1 | 1 | 1 | 1 | 1 |
| 2-Methylimidazole | 0.5 | 0.5 | 0.5 | 0.5 | 0.5 |
| Substrate (glass fiber fabric) | 1080 | 1080 | 1080 | 1080 | 1080 |
| Transmittance (%) | 50 | 20 | 48 | 30 | 30 |
| Bonding strength/ (lbf/inch) | 4.0 | 4.5 | 4.1 | 4.2 | 3.5 |
| Flexural strength/ (N/mm²) warp direction / weft direction | 561/538 | 454/432 | 522/514 | 532/519 | 345/325 |

### Example 15

(1) 5 parts of ethylenediamine and 50 parts of dimethylformamide were added into a batching bottle and fully stirred to dissolve. Thereafter, 40 parts of amino-terminated polydimethylsiloxane modified epoxy resin, 20 parts of bisphenol F epoxy resin, 1 part of anti-ultraviolet additive (specifically, ultraviolet absorber UV-O), and 0.5 parts of triethylamine were successively added into the batching bottle and fully stirred to prepare a glue solution.
(2) 1080 glass fiber fabric with a basis weight of 48 g/m² was impregnated with the glue solution, and baked in a hot air circulation oven at 150°C for 5 minutes to obtain a prepreg having a resin content of 68%.
(3) 6 prepregs were laminated, upper and lower sides of the laminate each were coated with a release film, and the laminate was placed in a vacuum pressing machine with programmable temperature and pressure control, and cured under vacuum at a pressure of 10 kgf/cm² and a product temperature of 150°C for 80 minutes to obtain a laminated board with a thickness of 0.6 mm.

### Example 16

(1) 5 parts of dicyandiamide and 50 parts of dimethylformamide were added into a batching bottle and fully stirred to dissolve. Thereafter, 40 parts of aminopropyl-terminated polydimethyldiphenylsiloxane modified epoxy resin, 20 parts of glycidyl ester epoxy resin, 1 part of a dispersant (specifically, dispersant 5040), and 0.5 parts of N,N-dimethylaniline were successively added into the batching bottle and fully stirred to prepare a glue solution.
(2) 1080 glass fiber fabric with a basis weight of 48 g/m² was impregnated with the glue solution, and baked in a hot air circulation oven at 180°C for 2 minutes to obtain a prepreg having a resin content of 68%.
(3) 6 prepregs were laminated, upper and lower sides of the laminate each were coated with a release film, and the laminate was placed in a vacuum pressing machine with programmable temperature and pressure control, and cured under vacuum at a pressure of 20 kgf/cm² and a product temperature of 180°C for 50 minutes to obtain a laminated board with a thickness of 0.6 mm.

Laminated boards obtained from Example 15 and Example 16 were tested with reference to performance test method as described above. The results are shown in the following table.

**Table 5**

| | Example 15 | Example 16 |
|---|---|---|
| Transmittance (%) | 82 | 81 |
| Bonding strength/ (lbf/inch) | 5.3 | 5.2 |
| Flexural strength/ (N/mm²) Warp direction / weft direction | 621/590 | 633/605 |

## Claims

1. An epoxy resin composition, **characterized by** comprising an epoxy resin A and an epoxy resin B;
wherein a refractive index of the epoxy resin A is 1.54 to 1.8 and a light transmittance measured as defined in the description of the epoxy resin A is greater than 90%;
wherein a refractive index of the epoxy resin B is 1.54 to 1.8 and a light transmittance measured as defined in the description of the epoxy resin B is greater than 90%; and
wherein the epoxy resin A is an organosilicon modified epoxy resin and the epoxy resin B is another type of epoxy resin;
wherein the organosilicon modified epoxy resin is at least one selected from a group consisting of hydroxyl-terminated polydimethylsilane modified epoxy resin epoxy resin, amino-terminated polydimethylsiloxane modified epoxy resin, and aminopropyl-terminated dimethyldiphenylsiloxane modified epoxy resin, and the another type of epoxy resin is selected from a group consisting of bisphenol A epoxy resin, bisphenol F epoxy resin, and glycidyl ester epoxy resin.

2. The epoxy resin composition according to claim 1, wherein a mass ratio of the epoxy resin A to the epoxy resin B is (1 to 3):1, preferably, (1.25 to 2):1.

3. An epoxy resin composite material, **characterized by** comprising the epoxy resin composition of any one of claims 1 to 2, a curing agent, and a curing accelerator.

4. The epoxy resin composite material according to claim 3, wherein the curing agent is at least one selected from a group consisting of ethylenediamine, modified hexamethylenediamine, hexamethylenediamine adduct, dicyandiamide, diaminodiphenylmethane, and diaminodiphenylsulfone.

5. The epoxy resin composite material according to claim 3, wherein the curing accelerator is at least one selected from a group consisting of N,N-dimethylbenzylamine, triethylamine, N,N-dimethylaniline, imidazoles accelerator, and peroxides accelerator.

6. The epoxy resin composite material according to any one of claims 3 to 5, further comprising an additional functional additive, and the additional functional additive is at least one selected from a group consisting of an antioxidants, an anti-ultraviolet additive, a dispersant, and a diluent.

7. A prepreg, **characterized by** being made from a raw material comprising a glass filler and a resin material, wherein the resin material is made from a raw material comprising the epoxy resin composition of any one of claims 1 to 2 or the epoxy resin composite material of any one of claims 3 to 6.

8. The prepreg of claim 7, wherein the glass filler is a glass fiber fabric.

9. A laminated board, **characterized by** comprising a laminate of the prepreg of claim 7 or 8.

10. The laminated board according to claim 9, wherein the laminate is coated with a release film on one or both sides thereof.

11. A method for preparing the laminated board of claim 9 or 10, **characterized by** comprising:
providing the prepreg, and laminating the prepreg followed by hot pressing under vacuum.

12. The method for preparing the laminated board according to claim 11, wherein conditions for the hot pressing under vacuum comprise a temperature of 150°C to 180°C, a pressure of 10 kgf/cm² to 20 kgf/cm², and a hot pressing time of 60 minutes to 90 minutes.

13. The method for preparing the laminated board according to claim 11 or 12, where the prepreg is prepared by impregnating the glass fiber into the resin material, and heating.

## Patentansprüche

1. Eine Epoxidharzzusammensetzung, die durch das Beinhalten von einem Epoxidharz A und einem Epoxidharz B gekennzeichnet ist;
wobei ein Brechungsindex des Epoxidharzes A 1,54 bis 1,8 ist und eine wie in der Beschreibung definiert gemessene Lichtdurchlässigkeit des Epoxidharzes A größer als 90 % ist;
wobei ein Brechungsindex des Epoxidharzes B 1,54 bis 1,8 ist und eine wie in der Beschreibung definiert gemessene Lichtdurchlässigkeit des Epoxidharzes B größer als 90 % ist; und
wobei das Epoxidharz A ein mit Organosilicium modifiziertes Epoxidharz und das Epoxidharz B eine andere Art von Epoxidharz ist;
wobei das mit Organosilicium modifizierte Epoxidharz mindestens eines ist, das aus einer Gruppe ausgewählt ist, die aus einem mit hydroxylterminiertem Polydimethylsilan modifizierten Epoxidharz Epoxidharz, einem mit aminoterminiertem Polydimethylsiloxan modifizierten Epoxidharz und einem mit aminopropylterminiertem Dimethyldiphenylsiloxan modifizierten Epoxidharz besteht, und die andere Art von Epoxidharz aus einer Gruppe ausgewählt ist, die aus Bisphenol-A-Epoxidharz, Bisphenol-F-Epoxidharz und Glycidylester-Epoxidharz besteht.

2. Epoxidharzzusammensetzung gemäß Anspruch 1, wobei ein Massenverhältnis des Epoxidharzes A zu dem Epoxidharz B (1 bis 3) : 1, vorzugsweise (1,25 bis 2) : 1, ist.

3. Ein Epoxidharz-Verbundmaterial, das durch das Beinhalten der Epoxidharzzusammensetzung gemäß einem der Ansprüche 1 bis 2, eines Aushärtungsmittels und eines Aushärtungsbeschleunigers gekennzeichnet ist.

4. Epoxidharz-Verbundmaterial gemäß Anspruch 3, wobei das Aushärtungsmittel mindestens eines ist, das ausgewählt ist aus einer Gruppe, bestehend aus Ethylendiamin, modifiziertem Hexamethylendiamin, Hexamethylendiamin-Addukt, Dicyandiamid, Diaminodiphenylmethan und Diaminodiphenylsulfon.

5. Epoxidharz-Verbundmaterial gemäß Anspruch 3, wobei der Aushärtungs-Beschleuniger mindestens einer ist, der ausgewählt ist aus einer Gruppe, bestehend aus N,N-Dimethylbenzylamin, Triethylamin, N,N-Dimethylanilin, Imidazol-Beschleuniger und Peroxid-Beschleuniger.

6. Epoxidharz-Verbundmaterial gemäß einem der Ansprüche 3 bis 5, das ferner ein zusätzliches funktionelles Additiv beinhaltet und das zusätzliche funktionelle Additiv mindestens eines ist, das aus einer Gruppe ausgewählt ist, die aus einem Antioxidationsmittel, einem Anti-Ultraviolett-Additiv, einem Dispergiermittel und einem Verdünnungsmittel besteht.

7. Ein Prepreg, **dadurch gekennzeichnet, dass** es aus einem Rohstoff hergestellt ist, der einen Glas-Füllstoff und ein Harzmaterial beinhaltet, wobei das Harzmaterial aus einem Rohstoff hergestellt ist, der die Epoxidharzzusammensetzung gemäß einem der Ansprüche 1 bis 2 oder das Epoxidharz-Verbundmaterial gemäß einem der Ansprüche 3 bis 6 beinhaltet.

8. Prepreg gemäß Anspruch 7, wobei der Glas-Füllstoff ein Glasfasergewebe ist.

9. Eine laminierte Platte, die durch das Beinhalten eines Laminats des Prepregs gemäß Anspruch 7 oder 8 gekennzeichnet ist.

10. Laminierte Platte gemäß Anspruch 9, wobei das Laminat mit einer Trennfolie auf einer oder beiden Seiten davon beschichtet ist.

11. Ein Verfahren zum Vorbereiten der laminierten Platte gemäß Anspruch 9 oder 10, das durch das Beinhalten von Folgendem gekennzeichnet ist:
Bereitstellen des Prepregs und Laminieren des Prepregs, gefolgt von Heißpressen unter Vakuum.

12. Verfahren zum Vorbereiten der laminierten Platte gemäß Anspruch 11, wobei die Bedingungen für das Heißpressen unter Vakuum eine Temperatur von 150 °C bis 180 °C, einen Druck von 10 kgf/cm² bis 20 kgf/cm² und eine Heißpresszeit von 60 Minuten bis 90 Minuten beinhalten.

13. Verfahren zum Vorbereiten der laminierten Platte gemäß Anspruch 11 oder 12, in dem das Prepreg durch Imprägnieren der Glasfaser in das Harzmaterial und Erhitzen vorbereitet wird.

## Revendications

1. Une composition de résine époxy, **caractérisée par le fait qu'**elle comprend une résine époxy A et une résine époxy B ;
dans laquelle un indice de réfraction de la résine époxy A va de 1,54 à 1,8 et une transmittance de la lumière mesurée tel que défini dans la description de la résine époxy A est supérieure à 90 % ;
dans laquelle un indice de réfraction de la résine époxy B va de 1,54 à 1,8 et une transmittance de la lumière mesurée tel que défini dans la description de la résine époxy B est supérieure à 90 % ; et
dans laquelle la résine époxy A est une résine époxy modifiée par de l'organosilicium et la résine époxy B est un autre type de résine époxy ;
dans laquelle la résine époxy modifiée par de l'organosilicium est au moins un élément sélectionné dans un groupe constitué d'une résine époxy résine époxy modifiée par du polydiméthylsilane à terminaison hydroxyle, d'une résine époxy modifiée par du polydiméthylsiloxane à terminaison amino, et d'une résine époxy modifiée par du diméthyldiphénylsiloxane à terminaison aminopropyle, et l'autre type de résine époxy est sélectionné dans un groupe constitué d'une résine époxy de bisphénol A, d'une résine époxy de bisphénol F, et d'une résine époxy d'ester glycidylique.

2. La composition de résine époxy selon la revendication 1, dans laquelle un rapport massique de la résine époxy A à la résine époxy B va de (1 à 3)/1, de préférence, de (1,25 à 2)/1.

3. Un matériau composite de résine époxy, **caractérisé par le fait qu'**il comprend la composition de résine époxy de n'importe laquelle des revendications 1 à 2, un agent de durcissement, et un accélérateur de durcissement.

4. Le matériau composite de résine époxy selon la revendication 3, dans lequel l'agent de durcissement est au moins un agent de durcissement sélectionné dans un groupe constitué de l'éthylène diamine, d'une hexaméthylène diamine modifiée, d'un adduit d'hexaméthylène diamine, du dicyandiamide, du diaminodiphénylméthane, et de la diaminodiphénylsulfone.

5. Le matériau composite de résine époxy selon la revendication 3, dans lequel l'accélérateur de durcissement est au moins un élément sélectionné dans un groupe constitué de la N,N-diméthylbenzylamine, de la triéthylamine, de la N,N-diméthylaniline, d'un accélérateur imidazoles, et d'un accélérateur peroxydes.

6. Le matériau composite de résine époxy selon n'importe laquelle des revendications 3 à 5, comprenant en outre un additif fonctionnel supplémentaire, et l'additif fonctionnel supplémentaire étant au moins un élément sélectionné dans un groupe constitué d'un antioxydant, d'un additif anti-ultraviolet, d'un dispersant, et d'un diluant.

7. Un préimprégné, **caractérisé par le fait qu'**il est réalisé à partir d'une matière première comprenant une charge de verre et un matériau de résine, dans lequel le matériau de résine est réalisé à partir d'une matière première comprenant la composition de résine époxy de n'importe laquelle des revendications 1 à 2 ou le matériau composite de résine époxy de n'importe laquelle des revendications 3 à 6.

8. Le préimprégné de la revendication 7, dans lequel la charge de verre est un tissu de fibres de verre.

9. Un panneau stratifié, **caractérisé par le fait qu'**il comprend un stratifié du préimprégné de la revendication 7 ou de la revendication 8.

10. Le panneau stratifié selon la revendication 9, dans lequel le stratifié est revêtu d'un film de démoulage sur un côté ou les deux côtés de celui-ci.

11. Un procédé pour préparer le panneau stratifié de la revendication 9 ou de la revendication 10, **caractérisé par le fait qu'**il comprend :
le fait de fournir le préimprégné, et le fait de stratifier le préimprégné suivi par le fait de presser à chaud sous vide.

12. Le procédé pour préparer le panneau stratifié selon la revendication 11, dans lequel des conditions pour le pressage à chaud sous vide comprennent une température allant de 150 °C à 180 °C, une pression allant de 10 kgf/cm² à 20 kgf/cm², et un temps de pressage à chaud allant de 60 minutes à 90 minutes.

13. Le procédé pour préparer le panneau stratifié selon la revendication 11 ou la revendication 12, où le préimprégné est préparé par le fait d'imprégner la fibre de verre à l'intérieur du matériau de résine, et le fait de chauffer.
